# EUROPEAN PATENT APPLICATION

(11) **EP 0 988 873 A2**
(43) Date of publication of application: **29.03.2000**
(21) Application number: 99307486.3
(22) Date of filing: 22.09.1999
(51) Int. Cl.: A62C 2/06

(54) **Intumescent pipe collar**

(30) Priority: 23.09.1998 GB 9820618
(71) Applicant: Reddiplex Group PLC, Droitwich, Worcestershire, WR9 9BG (GB)
(72) Inventor: Boot, Peter Lawrence, Grafton Flyford, Worcestershire WR9 9BG (GB)
(74) Representative: Makovski, Priscilla Mary

(57) **Abstract**

An intumescent pipe collar (1) surrounds a plastic pipe (2) running through a hole (3) in a partition (4). The collar (1) comprises a rigid support (5) which surrounds a sleeve or stretchable fabric (17) filled with intumescent material (16). The sleeve (17) is arranged between the support (5) and the pipe (2) and is more stretchable along its radial surface adjacent to the pipe (2) than along its axial end surfaces. In the event of a fire, as the pipe (2) melts and the intumescent material expands, the expansion is directed radially inward by this differential stretchability so that the hole (3) is efficiently filled.

## Description

This invention relates to an intumescent pipe collar of the kind protecting a hole in a partition through which a pipe means extends, and comprising a support means adapted to extend around the pipe means in or adjacent to the partition, and intumescent material adapted to be provided between the pipe means and the support means.

If the pipe means is a pipe of plastics material then in the event of a fire it melts at a relatively low temperature, leaving a passage in the partition through which the fire or smoke can spread. An intumescent pipe collar ensures that the passage is blocked in the event of a fire, by the intumescent material which expands at a relatively low temperature. As the support collar prevents the intumescent material expanding outwards, it expands inwardly across the passage left by melting of the pipe, and axially along the pipe. The intumescent material therefore provides a physical barrier in the hole through which the pipe passed. The pipe means may be a bundle of pipes, or cables, or indeed any elongate member likely to melt or be destroyed in a fire.

There are two disadvantages of such intumescent pipe collars. The first is that the structure of the expanded intumescent material is relatively fragile, so the barrier it creates can be destroyed by water or flame erosion, thus opening the passage again. It is known to overcome this disadvantage by providing a fabric sleeve which is pushed across the passage by the expanding intumescent material in order to reinforce the barrier (see WO 97/04838). The second disadvantage is that, even with the fabric sleeve, a large amount of intumescent material is wasted in expansion. This happens because, particularly with pipes of large diameter, the ratio of the area to the circumference of the pipe is large.

This means that a large amount of intumescent material must be put around the circumference of the pipe initially, in order to ensure that it expands inwardly far enough to block the passage. However, there is then a large amount of intumescent material which expands axially along the pipe, and is wasted.

According to the present invention, in an intumescent pipe collar of the kind set forth, the intumescent material is held in a stretchable element extending circumferentially and covering at least the radially inner surface and the axial end surfaces of the intumescent material, the stretchable element being arranged in use to stretch more in a radial direction than an axial direction.

The stretchable element therefore guides the expansion of the intumescent material in a radially inward direction, that is, across the passage, rather than an axial direction. There is therefore less intumescent material expanding along the pipe, so that less is wasted, and because the intumescent material is guided to the right place when it expands, less intumescent material is needed in the first place. The stretchable element also acts to reinforce the barrier created by the expanded intumescent material.

Advantageously the intumescent material comprises an elongate hollow member. This enables the collar to be easily assembled and assists fastening of the collar to the pipe. The intumescent elongate hollow member is preferably cylindrical, to fit round a circular pipe means. It may however be of hollow rectangular form, or any appropriate shape needed to fit the pipe means.

Preferably the stretchable element is made from fabric as this assists the intermingling of the stretchable element and the intumescent material upon expansion of the intumescent material.

The fabric element is preferably knitted from at least one yarn. A knitted fabric can easily be arranged to provide the preferential stretching required, either by the yarn used or the type of stitch. Preferably a different stitch is used on the radial surface of the fabric element from the axial surfaces of the fabric elements. Advantageously stocking stitch is used on the axial surfaces and ribbing stitch is used on the radial surface.

The intumescent material preferably contains an axially-extending gap. This enables the intumescent material to open to allow the pipe collar to be fitted round an existing pipe means. The material is preferably formed by extrusion and advantageously comprises a flexible strip which is adapted to be cut to length for installation of the pipe collar, enabling the same strip to be used for different sizes of pipe. It would however, be possible for the intumescent member to be made as a closed member, which could be used where the pipe collar is assembled on the partition before the pipe means is fitted.

The stretchable element is preferably tubular and encloses the radially outer surface as well as the radially inner surface and the axial end surfaces of the intumescent material in use. The stretchable element may comprise an elongate sleeve into which a strip of intumescent material is inserted. The ends of the sleeve may be overlapped or joined radially. Alternatively, the stretchable element may be a tube whose ends are joined circumferentially round the intumescent member.

The stretchable element is preferably flame-resistant. Where it is a fabric element, it stretches as the intumescent material expands and the gaps between adjacent fibres in the fabric element enlarge. The intumescent material then expands through these gaps, so that it becomes intermingled with the fabric and protects it from the fire, while the fabric element reinforces the intumescent material.

The fabric element may contain fibres or a yarn which is less elastic than the rest of the fibres or yarns, and which is destroyed at a temperature below that at which the intumescent material expands. These fibres help to maintain the shape of the fabric element, preventing it stretching during assembly of the intumescent material into the fabric element, and while the pipe collar is being assembled round the pipe. However these fibres are destroyed in the event of a fire, allowing the fabric element to stretch as required.

The support means is preferably substantially rigid in use, and preferably comprises a substantially rigid support collar in which the intumescent material is accommodated. Alternatively, it may be provided by the stretchable element, for example appropriate fibres or yarns may provide the necessary strength to support the intumescent material, particularly as it expands. Alternatively support means may be provided by the partition.

An embodiment of the invention is illustrated by way of example in the accompanying drawings, in which:
**Figure 1** shows a section through an intumescent pipe collar round a pipe;
**Figure 2** is a section showing in more detail part of the intumescent pipe collar of Figure 1;
**Figure 3** is a plan view, part cut away, of one embodiment of the intumescent material and fabric element of Figure 1;
**Figure 4** is similar to Figure 3 but shows a modification; and
**Figure 5** is similar to Figure 1 but shows the intumescent pipe collar after a fire.

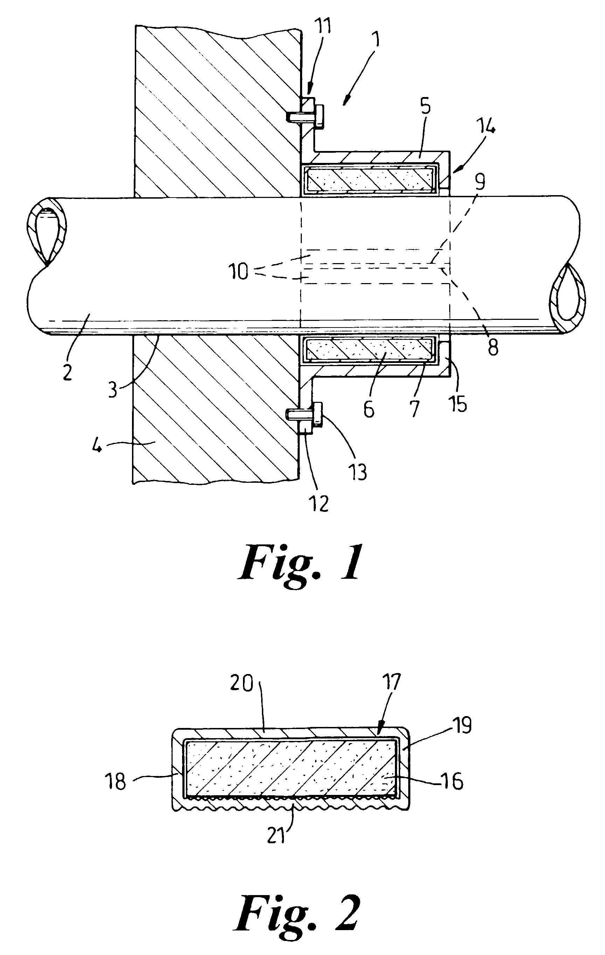

Figure 1 shows an intumescent pipe collar 1 supported round a cylindrical plastics pipe 2 which extends through a hole 3 in a partition 4, in this case a wall. The intumescent pipe collar 1 acts in the event of a fire, when the plastics pipe 2 melts, to block the passage in the hole 3 left when the pipe 2 melts.

The intumescent pipe collar 1 comprises a rigid annular metal support collar 5 in which is retained a hollow cylindrical member 6 of intumescent material contained in a stretchable fabric element 7. The intumescent member is arranged between the collar 5 and the pipe 2, and will expand in the event of a fire, at a predetermined relatively low temperature. The stretchable fabric element 7 is arranged to stretch more in a radial direction than an axial direction, to guide the expanding intumescent material to expand radially rather than axially.

The metal collar 5 is made of a one piece strip, bent round so that its ends 8,9 are adjacent but separated by a split extending axially to allow the collar 5 to open to fit round the pipe 2. The ends 8,9 have inturned flanges 10 for strength, and an over centre catch mechanism (not shown) is attached to the outside of the collar 5 to lock the collar 5 closed, and keep it rigid. At one axial end 11 the collar 5 has out-turned flanges 12 by which it is attached to the wall 4 by suitable fixing means, such as screws 13. At the other axial end 14 the collar 5 has inturned flanges 15 which retain the intumescent material.

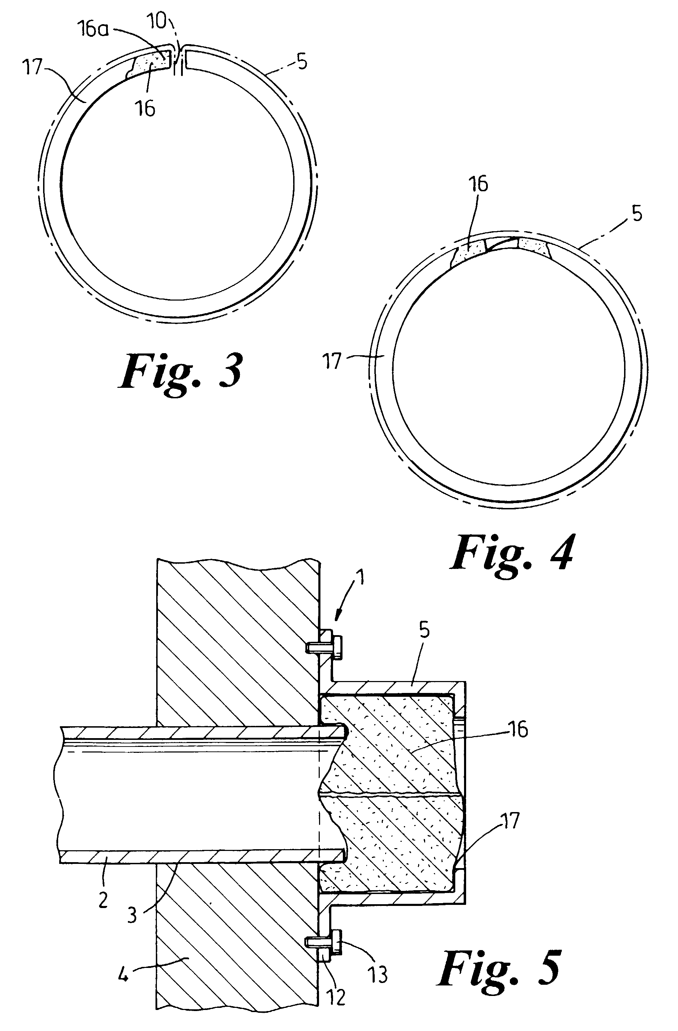

The intumescent member 6 is shown in more detail in Figures 2 and 3. It comprises an elongate strip 16 of intumescent material of rectangular cross-section. The intumescent material may be of any suitable type, for example a mixture of graphite and plastics materials which can be extruded into a continuous length of strip 16. The strip 16 is cut to the appropriate length, and is bent round into a cylinder, so that its free ends 16a engage the inturned flanges 10 on the ends of the collar 5. The strip 16 fits into the collar 5, and opens with it for fitting round the pipe 2.

The intumescent strip 16 is held in the stretchable fabric element 7, which surrounds it. The fabric element 7 is a tubular sleeve 17, and the intumescent strip 16 is inserted into it, the ends of the sleeve 17 being closed or folded over the ends of the strip 16. The fabric element 7 is knitted from flame-resistant yarn or yarns in such a way that when in a position of use it stretches more in a radially inwards direction than axially. Figure 2 shows diagrammatically how the difference in stretchability is provided by a difference in the type of stitch used in the knitting. Thus the stitch used on the axial end faces 18, 19 and the radially outer surface 20 is not very stretchy (for example, stocking stitch) whereas the stitch used on the radially inner surface 21 is much more stretchy, being for example a ribbing stitch. It is of course possible to obtain the differential stretching of the fabric element 7 in other ways, for example by the use of different yarns or different tension in the knitting process.

Thus, the intumescent pipe collar 1 is assembled by enclosing a strip 16 of appropriate length in a sleeve 17 of appropriate length, and then inserting it in the metal collar 5 from the end 11. The strip 16 in the sleeve 17 is held in place by the flanges 15 and the end flanges 10. The collar 1 can then be opened and fitted round the pipe 2, and the catch mechanism closed. The collar is then fastened to the wall 4 by the fixing screws 13 and the flanges 12. In this position the intumescent material, encased in the fabric element 7, is between the collar 5 and the pipe 2.

In the event of a fire, the plastics pipe 2 melts at a relatively low temperature. However, the intumescent strip 16 then expands, and is guided by the fabric element 7 to expand more radially than axially, in order to fill the gap left by the melted pipe 2. This is shown in Figure 5. As the fabric element 7 is flame-resistant, it will not be destroyed immediately, and when it expands the gaps in the knitting enlarge, allowing intumescent material through. The intumescent material and the fabric element 7 become intermingled. The intumescent material protects the fabric yarn from the fire, while the fabric reinforces and strengthens the intumescent material.

The use of the fabric element 7 to guide the expanding intumescent material reduces the amount of intumescent material that is wasted in axial expansion, and thus the amount that is needed in the first place.

In a modification (not shown) the fabric element 7 contains a yarn which is less elastic than the other yarn or yarns, but which is destroyed at a temperature below that at which the intumescent material expands. The less elastic yarn is arranged to help maintain the shape of the fabric element 7 during assembly of the collar 1 and its installation. However, this yarn is destroyed in a fire, allowing the fabric element 7 to stretch as required.

In a further modification (not shown) the metal collar 5 is omitted, and the fabric element 7 instead acts as the support collar. The fabric element 7 then has a portion, located on the radially outer surface of the intumescent member 6, formed from a fibre or yarn providing the appropriate tensile strength to support the intumescent material, particularly when it expands.

In a further modification (not shown) the partition 4 acts as a support. The collar is placed around the pipe 3 in the partition 4 and the partition 4 supports the intumescent material, especially when it expands.

In a further modification, shown in Figure 4, the metal collar 5 is formed as a closed circle, for use where the pipe collar 1 is fitted first and then the pipe 2 is inserted through it. In Figure 4 the intumescent member is still made from a length of elongate strip 16 encased in a sleeve 17, with the ends of the sleeve 17 being overlapped as shown. Alternatively, the ends of the sleeve 17 could be joined together, to form a torus. In a further modification (not shown), where the collar 5 is a closed circle the intumescent member 6 may also be made as an annulus. The fabric element 7 then comprises a sleeve of greater diameter, which is folded round the annulus and has a join or overlap extending circumferentially.

The collar 1 shown is of circular cross-section, but it is possible for it to have a rectangular or polygonal cross-section. The intumescent strip 16, being flexible, can fit these cross-sections as well. The intumescent strip 16 may be extruded as one hollow member, as shown herein. Alternatively, it may comprise several such members or alternatively many pieces of intumescent material. These could, for example, be offcuts from another manufacturing process. The intumescent material may take up the shape of the sleeve. The expansion of the intumescent material may be guided by one or a plurality of stretchable elements 17. Although these stretchable elements are shown as made from a fabric they may of course comprise any suitable stretchable material.

## Claims

1. An intumescent pipe collar (1) adapted to protect a hole (3) in a partition (4) through which a pipe means (2) extends, and comprising a support means adapted to extend around the pipe means (2) in or adjacent to the partition (4), and intumescent material (6) adapted to be provided between the pipe means (2) and the support means, characterised in that the intumescent material (6) is held in a stretchable element (17) extending circumferentially and covering at least the radially inner surface and the axial end surfaces of the intumescent material (6), the stretchable element (17) being arranged in use to stretch more in a radial direction than in an axial direction.

2. An intumescent pipe collar according to Claim 1 wherein the intumescent material (6) comprises an elongate hollow member.

3. An intumescent pipe collar according to Claim 2 wherein the elongate hollow member is cylindrical.

4. An intumescent pipe collar according to any preceding claim wherein the stretchable element (17) is made from fabric.

5. An intumescent pipe collar according to Claim 4 wherein the fabric element (17) is knitted from at least one yarn.

6. An intumescent pipe collar according to Claim 5 wherein a different stitch is used on the radial surface (21) of the fabric element (17) from the axial surfaces (18, 19) of the fabric element (17).

7. An intumescent pipe collar according to Claim 6 wherein stocking stitch is used on the axial surfaces (18, 19) and ribbing stitch is used on the radial surface (21).

8. An intumescent pipe collar according to any preceding claim wherein the intumescent material (6) contains an axially extending gap to allow the pipe collar (1) to be fitted around an existing pipe (2).

9. An intumescent pipe collar according to any preceding claim wherein the intumescent material (6) is formed by extrusion.

10. An intumescent pipe collar according to any preceding claim wherein the intumescent material (6) comprises a flexible strip adapted to be cut to length for installation of the pipe collar (1).

11. An intumescent pipe collar according to any preceding claim wherein the stretchable element (17) is tubular and encloses the intumescent material (6).

12. An intumescent pipe collar according to Claim 11, wherein the stretchable element (17) comprises an elongate sleeve into which a strip of intumescent material (6) is inserted.

13. An intumescent pipe collar according to any preceding claim wherein the stretchable element (17) is flame resistant.

14. An intumescent pipe collar according to any of Claims 4 to 13 wherein the fabric element (17) includes fibres or a yarn less elastic than the rest of the fibres or yarns, and which is destroyed at a temperature below that at which the instrument material (6) expands.

15. An intumescent pipe collar according to any preceding claim in which the support means comprises a substantially rigid support collar (5) in which the intumescent material (6) is accommodated.

16. An intumescent pipe collar according to any of Claims 1 to 14 wherein the support means is provided by the stretchable element (17).

17. An intumescent pipe collar according to any of Claims 1 to 14 wherein the support means is provided by the partition (4).
